# EUROPEAN PATENT SPECIFICATION

(11) **EP 3 030 478 B1**
(45) Date of publication and mention of the grant of the patent: **23.09.2020**
(21) Application number: 14741665.5
(22) Date of filing: 20.06.2014
(51) Int. Cl.: B62L 3/02, B62L 3/08, B60T 7/10, B60T 11/04, F16D 125/20, F16D 125/62, B60T 11/06, F16D 125/64

(54) **SYNCHRONIZED BRAKING SYSTEM**
SYNCHRONISIERENDES BREMSSYSTEM
SYSTÈME DE FREINAGE SYNCHRONISANT

(30) Priority: 09.08.2013 IN 3565CH2013
(43) Date of publication of application: 15.06.2016
(73) Proprietor: TVS Motor Company Limited, Chennai 600 006 (IN)
(72) Inventor: VALLI, Vijesh, Kallam, 600 006 Chennai (IN); BURNWAL, Deepmala, 600 006 Chennai (IN); NANDAKUMAR, Palanisamy, 600 006 Chennai (IN); MOHAN, Shanmugam, 600 006 Chennai (IN); MATHEWS, Winney, K., 600 006 Chennai (IN); BABU, Rengarajan, 600 006 Chennai (IN)
(74) Representative: Lavoix
(86) International application number: PCT/IB2014/001142
(87) International publication number: WO 2015/019133

(56) References cited:
- DE-U1- 29 715 855
- FR-A1- 2 704 505
- GB-A- 2 123 501
- JP-A- H0 516 867
- US-B1- 6 298 744

## Description

### TECHNICAL FIELD

The present subject matter, in general, relates to a braking system, and, in particular relates, to a synchronized braking system of a two-wheeled vehicle. Such a braking system is known from GB 2123501 A.

### BACKGROUND

In the last few decades, two-wheeler automobile industry has shown a remarkable growth and development, in terms of technology as well as sales. Due to consistent advancement in technology, two-wheeled vehicles, such as bicycles, motorcycles, scooters and light-weight scooters, have succeeded in maintaining their popularity among different sections of society. Different sections of society, based on their requirement, utilize the two-wheeled vehicles for various purposes, such as a recreational activity, a means of transportation, and for sports activities. As a result, it becomes pertinent for the two-wheeler automobile industry to constantly develop and modify the components of the two-wheeled vehicles to suit requirements of different riders.

In accordance with the same ideology, various types of braking systems have been developed for facilitating braking functionalities in the two-wheeled vehicles. Conventionally, combined braking systems (CBS) have gained widespread popularity across the globe. A combined braking system (CBS) allows simultaneous actuation of a front brake and a rear brake by application of a single brake lever.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Figure 1 illustrates a synchronized braking system, in accordance with an embodiment of the present subject matter.
Figures 2(a), 2(b), and 2(c) illustrate different views of a distributor of the synchronized braking system, in accordance with an embodiment of the present subject matter.
Figures 3(a) and 3(b) illustrate a combined brake lever with the distributor mounted on a handle bar of the synchronized braking system, in accordance with an embodiment of the present subject matter.
Figures 4(a) and 4(b) illustrate non-operating condition and operating condition, respectively, of the combined brake lever, in accordance with an embodiment of the present subject matter.
Figure 5(a) illustrates a front brake assembly mounted on a wheel of a two-wheeled vehicle, in accordance with an embodiment of the present subject matter.
Figure 5(b) illustrates a magnified view of the front brake assembly, in accordance with an embodiment of the present subject matter.
Figure 6(a) illustrates a friction-reduction apparatus of the synchronized braking system, in accordance with an embodiment of the present subject matter.
Figure 6(b) illustrates a sectional view of the friction-reduction apparatus, in accordance with an embodiment of the present subject matter.
Figures 7(a), 7(b), and 7(c) illustrate the friction-reduction apparatus mounted on the front brake assembly, in accordance with an embodiment of the present subject matter.

### DETAILED DESCRIPTION

The subject matter described herein relates to a synchronized braking system for a two-wheeled vehicle, according to an embodiment of the present subject matter.

Conventionally, two-wheeled vehicles are provided with a braking system for slowing or stopping the vehicle. The braking system, usually, includes at least one brake assembly, such as a front wheel brake assembly and a rear wheel brake assembly for a front wheel and a rear wheel, respectively. Such brake assemblies may include, but are not limited to a cam lever, a cam pin, and a pair of friction pads. Further, each of the front wheel brake assembly and the rear wheel brake assembly is connected to a brake lever for actuation. For example, the brake lever may be coupled to a pair of friction pads for applying friction to each wheel of the two-wheeled vehicle, as and when required. The brake lever can be connected to the brake assembly in a variety of ways. For example, the brake lever can be connected to the brake assembly by means of a cable. In such a case, one end of the cable may be secured to the brake assembly, and the other end of the cable may be secured to the brake lever. Consequently, actuation of the brake lever may result in actuation of the brake assembly and subsequently, the brake may be applied.

Generally, the front wheel and the rear wheel are provided with separate braking systems. Conventional two-wheeler braking systems usually include either hand-operated brakes for both the wheels or include a combination of hand-operated and foot-operated brakes. In the latter case, generally, the front wheel brakes are hand-operated, and include a front wheel brake lever mounted on a handle of the two-wheeled vehicle for actuation, whereas the rear wheel brakes can be foot-operated by a rear wheel brake lever provided near a foot-rest of the rider.

During operation of the brakes, usually, riders apply the rear wheel brake alone. Such a practice stems from the fact that actuating both the brake levers at the same time may be inconvenient for the rider. In addition, when the front wheel brake is applied, less load on the front wheel and weight transfer towards the front wheel cause the front wheel to brake abruptly, and may result in a sudden jerk to the vehicle. The sudden jerk may affect the ride quality and may also disturb the balance and stability of the vehicle leading to an accident. However, on the other hand, the braking force applied for braking the rear wheel may have to be limited, to prevent skidding of the vehicle. As a result, the deceleration experienced by the vehicle may also be limited and subsequently, the stopping distance of the vehicle may be significantly large.

Conventionally, in order to address the abovementioned concerns, combined braking systems (CBS) have been developed. A combined braking system may provide to couple the front wheel brake and the rear wheel brake to a single brake lever, say the rear brake lever. Accordingly, upon actuation of the single brake lever, the combined braking system may allow distribution of braking force to the front wheel as well as the rear wheel of the vehicle. Therefore, the front wheel brake and the rear wheel brake can be simultaneously applied by actuating one brake lever, also referred to as combined wheel brake lever. In addition to being convenient for the rider, the combined braking system may ensure that the deceleration of the vehicle can be increased and subsequently, the stopping distance may be reduced. Further, as would be understood, in two-wheeled vehicles with combined braking system, a front wheel brake lever may also be provided to independently operate the front wheel brake.

Further, in the conventional combined braking system, a cable from each of the front wheel brake lever and the combined wheel brake lever may be connected to the front wheel brake assembly. In one example, a cable connecting the combined wheel brake lever to the front wheel brake assembly may be referred to as a first cable. Similarly, a cable connecting a front wheel brake lever to the front wheel brake assembly can be referred to as a second cable. Further, the front wheel brake assembly may include a cam lever and a cam pin for supporting each of the first cable and the second cable. Therefore, the first cable and the second cable may be coupled to the front wheel brake assembly through the cam lever, and may maintain a contact with the corresponding cam pin.

In the conventional combined braking system, upon actuation of the combined brake lever, the braking force is equally distributed to the front wheel brake and the rear wheel brake. However, even in such scenarios, due to lesser load on the front wheel brake than that on the rear wheel brake, the braking force experienced by the front wheel brake may be substantially more than the rear wheel brake causing instability of the vehicle. Such situations may also result the vehicle to nose dive, i.e., experience a jerk in the forward direction. Under such circumstances, the rider, for example a novice rider, may experience discomfort while riding. In addition, various components, such as front fork suspension assembly and the wheel, may experience large forces leading to accelerated wear and tear, and increasing the cost of maintenance of the vehicle.

Further, during operation of the combined braking system, when the rider actuates the combined wheel brake lever, the first cable is pulled to actuate the cam lever of the front wheel brake assembly. However, in such a situation, the second cable may remain stationary with reference to the first cable and the cam lever. As a result, the portion of the cam lever and the cam pin in contact with the second cable may slide over the second cable. The sliding of the cam lever over the second cable results in abrasion of the second cable. Similarly, the first cable may experience abrasion when the second cable and the cam lever are actuated. As a result, overall service life of the brake cables may be substantially low due to the continuous wear and tear and poor braking feedback. In addition, the generation of the frictional forces may cause a loss of the braking force, which in turn, may cause a reduction in the effectiveness of braking.

In addition, the conventional combined braking systems employ a large number of components and linkages to connect the combined brake lever to the front wheel brake assembly. Consequently, weight of the combined braking system assembly may be substantially high. Further, such heavy and complex combined braking systems with the large number of components may require greater maintenance and skilled labor. Such a situation may add to the maintenance cost of the vehicle. In addition, due to lack of space on the vehicle, providing a parking brake arrangement may also become difficult. Accordingly, the conventional combined braking systems may suffer from lack of overall braking effectiveness and high costs.

The present subject matter provides a synchronized braking system for two-wheeled vehicles. The synchronized braking system of the present subject matter includes a front wheel brake and a rear wheel brake. A front wheel brake lever may be provided to apply the front wheel brake. Similarly, a combined wheel brake lever may be provided to apply the front wheel brake simultaneously with the rear wheel brake. Further, a distributor may be connected to the combined wheel brake lever, and is coupled to the front wheel brake through a combined front brake cable, and to the rear wheel brake through a rear brake cable. The distributor is pivoted about a distributor pivot axis, the distributor pivot axis being offset to a centre axis of the distributor. In one implementation, the synchronized braking system may further include a friction reduction apparatus for minimizing friction generated at the front wheel brake due to actuation of at least one of the combined wheel brake lever and the front wheel brake lever. The friction reduction apparatus may include a stopper for holding each of the combined front brake cable and an independent front brake cable, and an insert coupled to each stopper. Each insert may prevent direct contact of a cam lever and a pin with each of the independent front brake cable and the combined front brake cable, when either the combined wheel brake lever, or the front wheel brake lever, or both are actuated.

As mentioned above, the synchronized braking system may include the front wheel brake and the rear wheel brake. In one implementation, the front wheel brake lever and the combined wheel brake lever may be provided on a handle of the two-wheeled vehicle. The front wheel brake lever and the combined wheel brake lever may be connected to a front wheel brake assembly using the independent front brake cable and the combined front brake cable, respectively.

A rider may actuate the front wheel brake lever to apply the front wheel brake. Similarly, the rider may actuate the combined wheel brake lever to apply the front wheel brake as well as the rear wheel brake. Due to the synchronized operation of the front wheel brake and the rear wheel brake, the braking system is referred to as the synchronized braking system. The combined wheel brake lever is pivoted about a distributor pivot. Further, the distributor may be connected to the combined wheel brake lever, and rests against a lever holder. In one implementation, the distributor may be pivoted about the distributor pivot. Further, the distributor may have a top hole and a bottom hole to hold the combined front brake cable and a rear brake cable, respectively. In one implementation, a distance of the top hole from the distributor pivot, hereinafter referred to as X, may be more than a distance of the bottom hole from the distributor pivot, hereinafter referred to as Y.

Further, upon actuation of the combined front wheel brake lever, the distributor may get pulled along with the combined front wheel brake lever. Consequently, the combined front brake cable and the rear brake cable may also be pulled and therefore, apply the front wheel brake as well as the rear wheel brake. Since the distance X is greater than the distance Y, a braking force generated in the front wheel brake may be less than the braking force generated in the rear wheel brake. Therefore, a possibility of skidding of the vehicle and consequently, an unbalance and instability of the vehicle and the rider can be avoided. Further, by varying the distance X and the distance Y of the distributor, a proportion of the braking force to be distributed in the front wheel brake and the rear wheel brake can be varied on the basis of the requirement. As a result, in various scenarios, the synchronized braking system may ensure safety and comfort of the rider.

As mentioned earlier, on one end, the independent front brake cable and the combined front brake cable may be connected to the front wheel brake lever and the distributor, respectively. Similarly, on the other end, the independent front brake cable and the combined front brake cable may be connected to the front wheel brake assembly. The front wheel brake assembly may further include the cam lever and the pins to support each of the combined front wheel cable and the independent front wheel cable.

In one implementation, the friction reduction apparatus may be provided at the front wheel brake assembly. The friction reduction apparatus may surround each of the combined front brake cable and the independent front brake cable, in such a manner that there is no contact between the cam lever and the pins with the brake cables. The friction reduction apparatus may include a stopper and a corresponding insert for each brake cable. In one implementation, the stopper and the corresponding insert may be coupled through plug welding. In another implementation, each stopper may be internally threaded to firmly hold the corresponding brake cable, and the insert may be in contact with the pins. Therefore, in case of actuation of one of the front wheel brake lever and the combined wheel brake lever, the pin may slide over the corresponding insert, instead of the brake cable. In addition, a check nut may be provided for each of the brake cable for avoiding a possibility of loosening of the insert, when the insert loses contact with the pin.

As would be gathered, by providing the distributor for distribution of the braking force, the synchronized braking system of the present subject matter minimizes the possibility of skidding of the vehicle and subsequently, ensures a safe and comfortable ride of the vehicle. Further, the friction reduction apparatus prevents the generation of frictional forces at the front brake wheel. Therefore, loss in the braking force and reduction in the effectiveness of the braking are also avoided. In addition, service life of the brake cables may be enhanced.

Moreover, the synchronized braking system includes minimal number of components and therefore, has a simple construction. Therefore, the synchronized braking system can be conveniently installed in the two-wheeled vehicles. Also, minimal linkages are provided for the operation of the synchronized braking system. As a result, maintenance of components of the synchronized braking system is convenient. In addition, due to compact size and weight of the synchronized braking system, a parking brake arrangement may also be installed in the vehicle. In one implementation, the parking brake arrangement may include a clamping or a locking device integrated with a brake lever. In a parked position of a two-wheeled vehicle, when the brake lever is actuated, the clamping device or the locking device restricts the release of the brake lever. Therefore, the brake lever may remain pressed, and brakes stay applied, in turn, making the two-wheeled vehicle immobile. As would be gathered, the synchronized braking system is economic and convenient for riders.

Specific details of several embodiments of the synchronized braking system of the present subject matter are described below with reference to particular components and associated procedures. In other embodiments, the components and associated methods can have other arrangements. Several details describing structures and processes that are well-known and are often associated with such synchronized braking systems but may unnecessarily obscure some significant aspects of the disclosure, are not set forth in the following description for purposes of clarity. Moreover, although the following disclosure sets forth several embodiments of different aspects of the invention, several other embodiments can have different configurations or different components than those described in the forthcoming section. As such, the present disclosure and associated technology can encompass other embodiments with additional elements and/or other embodiments without several of the elements described below with reference to the figures.

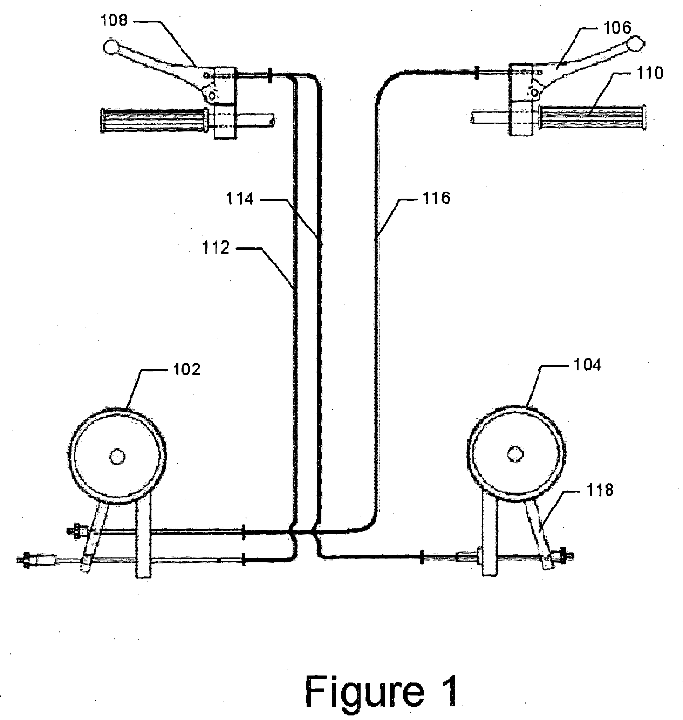

Figure 1 illustrates the synchronized braking system 100, hereinafter referred to as system 100, for a two-wheeled vehicle, in accordance with an embodiment of the present subject matter. The system 100 includes a front wheel brake 102 and a rear wheel brake 104. Further, a front wheel brake lever 106 may be actuated to apply the front wheel brake 102. Similarly, a rider may actuate a combined wheel brake lever 108 for applying the front wheel brake 102 as well as the rear wheel brake 104. In one implementation, the front wheel brake lever 106 and the combined wheel brake lever 108 may be disposed on a right-hand side and a left-hand side of a handle bar 110 of the vehicle, respectively. In another implementation, instead of providing the combined wheel brake lever 108 on the handle bar 110, a foot pedal (not shown) can serve as the combined wheel brake lever 108 to apply the front wheel brake 102 as well as the rear wheel brake 104. In a further implementation, instead of the independently provided front wheel brake lever 106, the system 100 may include a rear wheel brake lever (not shown) to independently apply the rear wheel brake 104. Therefore, in such an implementation, the system 100 may include the rear wheel brake lever to independently apply the rear wheel brake 104, and the combined wheel brake lever 108 for applying the front wheel brake 102 as well as the rear wheel brake 104.

Further, a distributor (not shown) may be coupled to work in conjunction with the combined wheel brake lever 108. Further, the distributor may be connected with a combined front brake cable 112 and a rear brake cable 114 to simultaneously actuate the front wheel brake 102 and the rear wheel brake 104. Similarly, the front wheel brake lever 106 may be connected with an independent front brake cable 116 to independently actuate the front wheel brake 102.

Further, the combined front brake cable 112 and the independent front brake cable 116 may be connected to a front wheel brake assembly (not shown) of the front wheel brake 102. The front wheel brake assembly may include a cam lever 118, and a tip (not shown) for each of the combined front brake cable 112 and the independent front brake cable 116. In one implementation, a friction reduction apparatus (not shown) may also be provided to support the combined front brake cable 112 and the independent front brake cable 116.

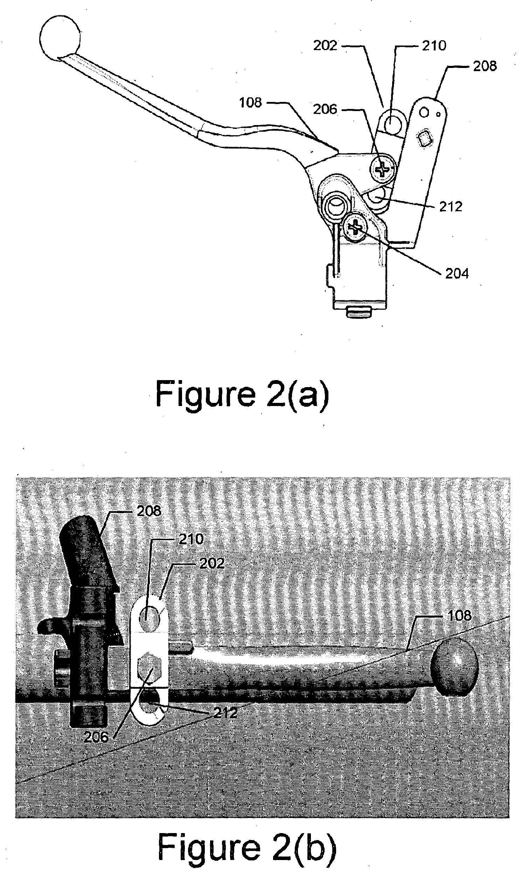

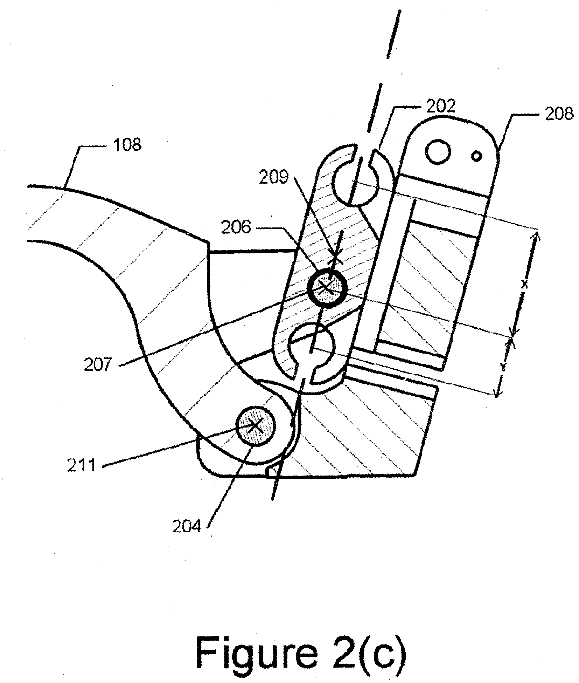

Figures 2(a)-2(c) illustrate different views of the distributor 202 coupled to the combined wheel brake lever 108 of the system 100, in accordance to an embodiment of the present subject matter, and these figures are explained in conjunction with each other. The combined wheel brake lever 108 may be pivoted about a brake lever pivot 204. Similarly, the distributor 202 may be pivoted about a distributor pivot 206. Therefore, the distributor 202 can be rotated with respect to the combined wheel brake lever 108, based on a requirement, about the distributor pivot 206. In one implementation, the distributor pivot 206 may be disposed on the distributor 202 in such a manner that a distributor pivot axis 207 may be offset to a centre axis 209 of the distributor 202. In another implementation, the distributor pivot axis 207 may be parallel to a combined brake lever axis 211. In yet another implementation, the distributor pivot axis 207 may be perpendicular to the combined brake lever axis 211.

Further, in a non-operating condition, the distributor 202 may rest against a lever holder 208. In one implementation, the distributor 202 may have a top hole 210 and a bottom hole 212 to hold the combined front brake cable 112 and the rear brake cable 114, respectively. Continuing with the present implementation, due to the distributor pivot 206 being offset to the center axis 209, a distance of the top hole 210 from the distributor pivot 206, hereinafter referred to as X, may be more than a distance of the bottom hole 212 from the distributor pivot 206, hereinafter referred to as Y.

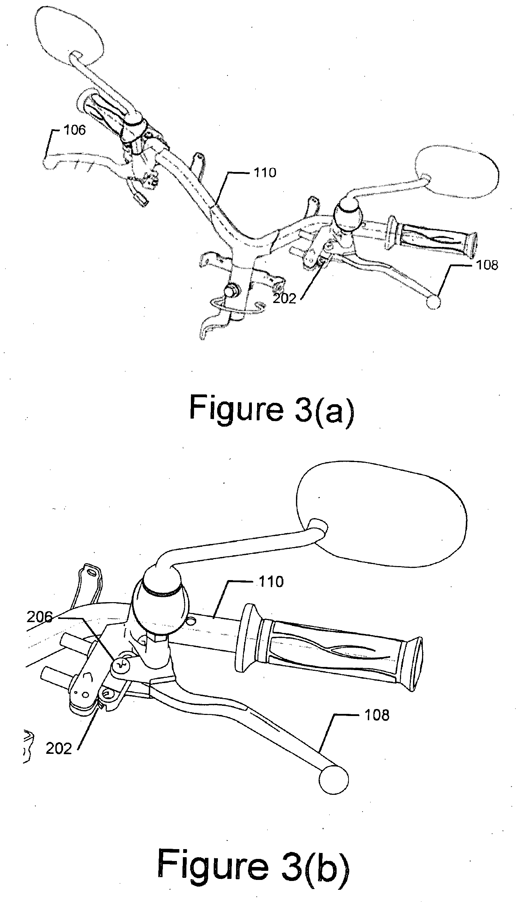

Figure 3(a) illustrates the distributor 202 installed on the handle bar 110 of the two-wheeled vehicle, in accordance to an embodiment of the present subject matter. As shown in the figure, the combined wheel brake lever 108 is installed on the left-hand side of the handle bar 110. Similarly, the front wheel brake lever 106 is installed on the right-hand side of the handle bar 110. Further, figure 3(b) illustrates a blown-up view of the combined wheel brake lever 108 coupled with the distributor 202, installed on the handle bar 110 of the two-wheeled vehicle, in accordance to an embodiment of the present subject matter.

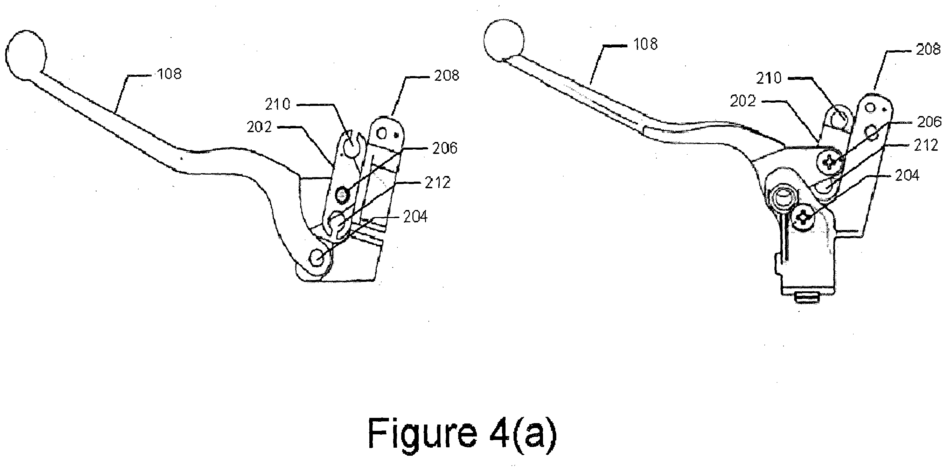

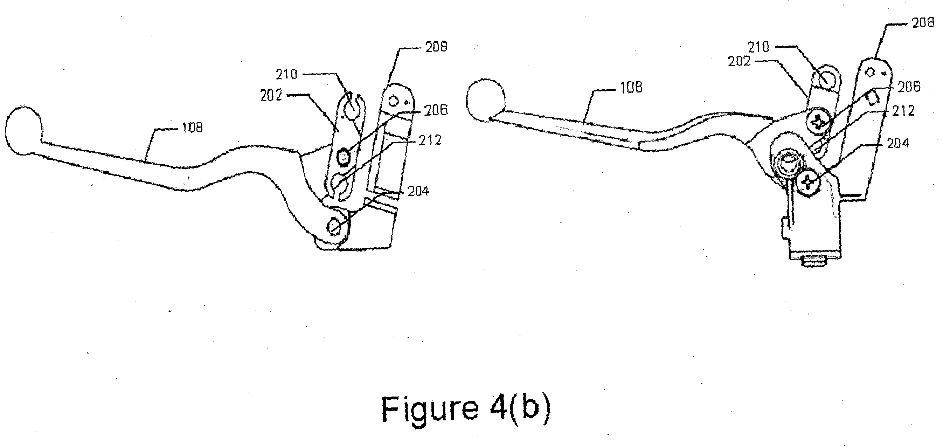

Figures 4(a) and 4(b) illustrate the distributor 202 coupled to the combined wheel brake lever 108, in non-operating condition and an operating condition, respectively. As shown in figure 4(a), in a non-operating condition, the distributor 202 may rest on the lever holder 208. However, with reference to figure 4(b), upon actuation of the combined wheel brake lever 108, the distributor 202 may get pulled along with the combined wheel brake lever 108 and therefore, may lose contact with the lever holder 208. Consequently, the combined front brake cable (not shown) and the rear brake cable (not shown) connected to the top hole 210 and the bottom hole 212 of the distributor 202, may also be pulled and therefore, applying the front wheel brake (not shown) as well as the rear wheel brake (not shown).

Further, due to the fact that the distance X is greater than the distance Y, a braking force generated in the front wheel brake (not shown) may always be less than the braking force generated in the rear wheel brake (not shown). Therefore, skidding of the front wheel and the rear wheel can be avoided.

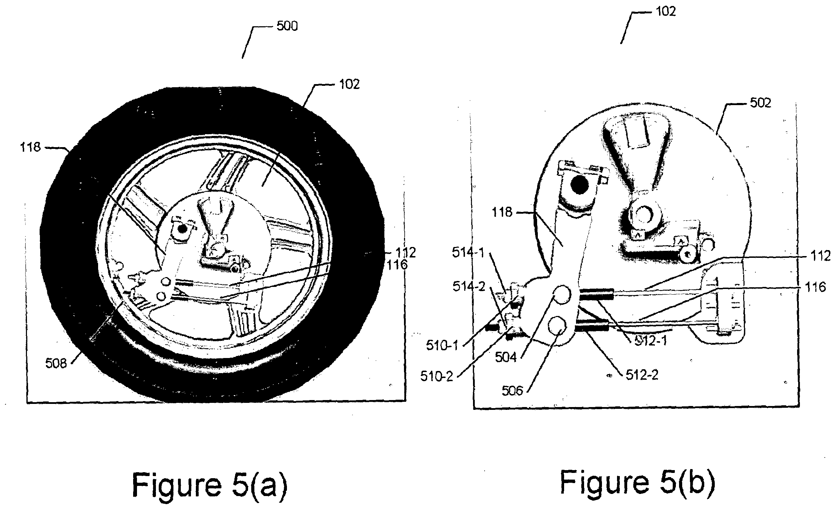

Figure 5(a) illustrates a front wheel brake 102 disposed on a front wheel 500 of the two-wheeled vehicle. As would be gathered, on one end, the independent front brake cable 116 and the combined front brake cable 112 may be connected to the front wheel brake lever 106 and the distributor 202, respectively. Similarly, on the other end, the independent front brake cable 116 and the combined front brake cable 112 may be connected to a front wheel brake assembly 502 of the front wheel brake 102.

The front wheel brake assembly 502 may further include the cam lever 118, and a pin 504, 506 for supporting each of the combined front brake cable 112 and the independent front brake cable 116, respectively. In one implementation, the friction reduction apparatus 508 may be installed at the front wheel brake 102 for supporting the combined front brake cable 112 and the independent front brake cable 116.

The friction reduction apparatus 508 may surround each of the combined front brake cable 112 and the independent front brake cable 116, in such a manner that there is no contact between the cam lever 118 and the pins 504, 506 with each of the combined front brake cable 112 and the independent front brake cable 116, respectively. In one implementation, the friction reduction apparatus 508 may include a stopper 510-1, 510-2 and a corresponding insert 512-1, 512-2 for each of the combined front brake cable 112 and the independent front brake cable 116, respectively. In one implementation, the stopper 510-1, 510-2 and the corresponding insert 512-1, 512-2 may be coupled through plug welding.

Further, the stopper 510-1, 510-2 may be internally threaded to firmly hold the combined front brake cable 112 and the independent front brake cable 116, and the insert 512-1, 512-2 may stay in contact with the corresponding pins 504, 506. Therefore, in case of actuation of the front wheel brake lever 106, the pin 504 may slide over the insert 512-1, instead of the combined front brake cable 112. Similarly, in case of actuation of the combined wheel brake lever 108, the pin 506 may slide over the insert 512-2, instead of the independent front brake cable 116. In addition, a check nut 514-1, 514-2 may be provided for each of the combined front brake cable 112 and the independent front brake cable 116, respectively. The check nuts 514-1, 514-2 may avoid a possibility of loosening of the insert 512-1, 512-2, when the insert 512-1, 512-2 loses a contact with the corresponding pin 504, 506.

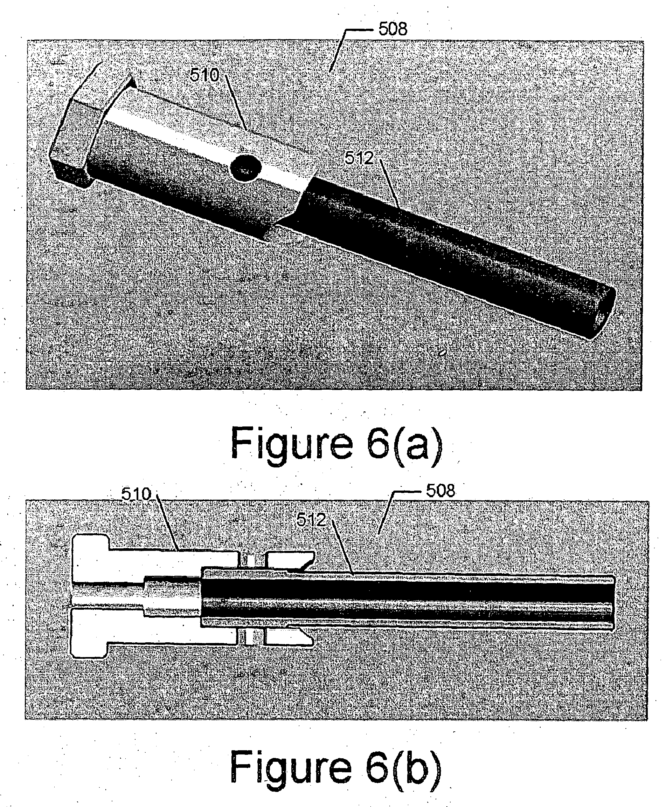

Figures 6(a) and 6(b) illustrate the friction reduction apparatus 508 to be installed at the front wheel brake assembly 502 of the front wheel brake 102, in accordance with an embodiment of the present subject matter. As mentioned above, the friction reduction apparatus 508 may be installed for supporting each of the combined front brake cable 112 and the independent front brake cable 116. Figure 6(b), specifically, illustrates a cut-away view of the friction reduction apparatus 508 including the stopper 510 and the insert 512.

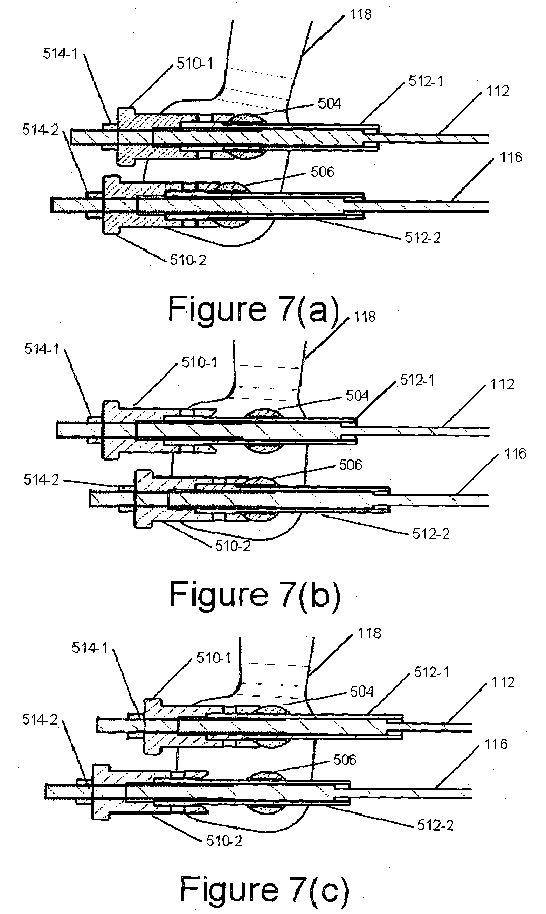

Figures 7(a)-7(c) illustrate the friction reduction apparatus 508 mounted on the cam lever 118 of the front wheel brake 102, in accordance with an embodiment of the present subject matter. Figure 7(a), specifically, illustrates the friction reduction apparatus 508 installed on the cam lever 118, in a non-operating condition, i.e., none of the combined wheel brake lever 108 and the front wheel brake lever 106 is actuated by a rider.

Figure 7(b) illustrates a situation when the rider actuates the front wheel brake lever 106. In such an implementation, as shown, the front wheel brake lever 106 may pull the cam lever 118 through the independent front brake cable 116. The movement of the cam lever 118 may result into movement of the pins 504, 506. However, the combined front brake cable 112 may remain idle. Further, as mentioned above, the combined front brake cable 112 and the independent front brake cable 116 may be surrounded by the stopper 510-1, 510-2 and the insert 512-1, 512-2, respectively. Due to the idle state of the combined front brake cable 112, the pin 504 may slide over the insert 512-1 avoiding a contact between the pin 504 and the combined front brake cable 112, and therefore, avoiding generation of frictional forces.

Figure 7(c) illustrates a situation when the rider actuates the combined wheel brake lever 108. In such an implementation, as shown, the combined wheel brake lever 108 may pull the cam lever 118 through the combined front brake cable 112. The movement of the cam lever 118 may result into movement of the pins 504, 506. However, the independent front brake cable 116 may remain idle. Due to the idle state of the independent front brake cable 116, the pin 506 may slide over the insert 512-2 avoiding a contact between the pin 506 and the independent front brake cable 116, and therefore, avoiding generation of frictional forces.

Although the subject matter has been described in considerable detail with reference to certain embodiments thereof, other embodiments are possible within the scope of the invention as defined by the appended claims.

## Claims

1. A synchronized braking system (100) for a two-wheeled vehicle, the synchronized braking system (100) comprising:
a front wheel brake assembly (502) comprising a cam lever (118), a front wheel brake (102) and a front wheel brake lever (106), coupled to the front wheel brake (102) through an independent front brake cable (116), to actuate the front wheel brake (102) during operation;
a rear wheel brake (104);
a combined wheel brake lever (108), coupled to the front wheel brake (102) through a combined front brake cable (112) and coupled to the rear wheel brake (104) through a rear brake cable (114), to actuate the front wheel brake (102) and the rear wheel brake (104), respectively, during operation; and
**characterized in that**, the synchronized braking system (100) further comprising:
a friction reduction apparatus (508) for minimizing friction in the front wheel brake (102) on actuation of at least one of the front wheel brake lever (106) and the combined wheel brake lever (108), the friction reduction apparatus (508) comprising:
an insert (512-1, 512-2) mounted on each of the independent front brake cable (116) and the combined front brake cable (112) for preventing direct contact of the cam lever (118) with each of the combined front brake cable (112) and the independent front brake cable (116), wherein the cam lever (118) slides on the insert (512-1, 512-2) when actuated by at least one of the front wheel brake lever (106) and the combined wheel brake lever (108).

2. The synchronized braking system (100) as claimed in claim 1, wherein the friction reduction apparatus (508) further comprises a stopper (510-1, 510-2) for surrounding and supporting each of the independent front brake cable (116) and the combined front brake cable (112).

3. The synchronized braking system (100) as claimed in claim 2, wherein each stopper (510-1, 510-2) is threaded to tighten against each of the combined front brake cable (112) and the independent front brake cable (116).

4. The synchronized braking system (100) as claimed in claim 1, wherein the cam lever (118) comprises a plurality of pins (504, 506), and wherein the cam lever (118) slides on the insert (512-1, 512-2) at the plurality of pins (504, 506).

5. The synchronized braking system (100) as claimed in claim 2, wherein the stopper (510-1, 510-2) abuts against a pin (504, 506) to actuate the cam lever (118), upon actuation of one of the combined wheel brake lever (108) and the front wheel brake lever (106).

6. The synchronized braking system (100) as claimed in claim 2, wherein the friction reduction apparatus (508) further comprises a first check nut (514-1) for the combined front brake cable (112), and a second check nut (514-2) for the independent front brake cable (116), for preventing free rotation of each stopper (510-1, 510-2) during the vehicle operation.

7. The synchronized braking system (100) as claimed in claim 1 further comprising a distributor (202) connected to the combined wheel brake lever (108), wherein the distributor (202) is coupled to the front wheel brake (102) by the combined front brake cable (112) and to the rear wheel brake (104) by the rear brake cable (114), to actuate the front wheel brake (102) and the rear wheel brake (104), respectively, upon actuation of the combined wheel brake lever (108).

8. The synchronized braking system (100) as claimed in claim 7, wherein the distributor (202) is pivoted about a distributor pivot axis (207), and the distributor pivot axis (207) is offset along a length of the distributor (202) with respect to a center axis (209) of the distributor (202).

9. The synchronized braking system (100) as claimed in claim 8, wherein the combined wheel brake lever (108) is pivoted about a combined lever pivot axis (211), the combined lever pivot axis (211) being parallel to the distributor pivot axis (207).

10. The synchronized braking system (100) as claimed in claim 8, wherein the combined wheel brake lever (108) is pivoted about a combined lever pivot axis (211), the combined lever pivot axis (211) being perpendicular to the distributor pivot axis (207).

## Patentansprüche

1. Synchronbremssystem (100) für ein Zweirad, wobei das System (100) umfasst:
eine Vorderradbremseinrichtung (502), umfassend einen Exzenterhebel (118), eine Vorderradbremse (102) und einen Vorderradbremshebel (106), der über ein unabhängiges vorderes Bremsseil (116) mit der Vorderradbremse (102) gekoppelt ist, um im Betrieb die Vorderradbremse (102) zu betätigen;
eine Hinterradbremse (104);
einen Mehrradbremshebel (108), der über ein vorderes Mehrradbremsseil (112) mit der Vorderradbremse (102) und über ein Hinterradbremsseil (114) mit der Hinterradbremse (104) gekoppelt ist, um im Betrieb die Vorderrad- (102) und Hinterradbremse (104) zu betätigen, und
**dadurch gekennzeichnet, dass** das System (100) ferner umfasst:
eine Reibungsminderungsvorrichtung (508) zur Minimierung der Reibung in der Vorderradbremse (102) bei Betätigung mindestens eines des Vorderradbremshebels (106) und des Mehrradbremshebels (108), wobei die Vorrichtung (508) umfasst:
einen auf jedem des unabhängigen vorderen Bremsseils (116) und des vorderen Mehrradbremsseils (112) montierten Einsatz (512-1, 512-2) zur Verhinderung eines unmittelbaren Kontakts des Exzenterhebels (118) mit jedem des vorderen Mehrradbremsseils (112) und des unabhängigen vorderen Bremsseils (116), wobei der Exzenterhebel (118) bei Betätigung durch mindestens einen des Vorderradbremshebels (106) und des Mehrradbremshebels (108) auf dem Einsatz (512-1, 512-2) gleitet.

2. Synchronbremssystem (100) nach Anspruch 1, wobei die Vorrichtung (508) ferner einen Stopfen (510-1, 510-2) umfasst, um jedes des unabhängigen vorderen Bremsseils (116) und des vorderen Mehrradbremsseils (112) zu umschließen und zu unterstützen.

3. Synchronbremssystem (100) nach Anspruch 2, wobei jeder Stopfen (510-1, 510-2) mit einem Gewinde versehen ist, um sich gegen jedes des Mehrradbremsseils (112) und des unabhängigen vorderen Bremsseils (116) festzuziehen.

4. Synchronbremssystem (100) nach Ansprch 1, wobei der Exzenterhebel (118) eine Vielzahl Stifte (504, 506) umfasst, und wobei der Exzenterhebel (118) an der Vielzahl Stifte (504, 506) auf dem Einsatz (512-1, 512-2) gleitet.

5. Synchronbremssystem (100) nach Anspruch 2, wobei der Stopfen (510-1, 510-2) an einem Stift (504, 506) anliegt, um den Exzenterhebel (118) bei Betätigung eines des Mehrradbremshebels (108) und des Vorderradbremshebels (106) zu betätigen.

6. Synchronbremssystem (100) nach Anspruch 2, wobei die Vorrichtung (508) ferner eine erste Kontermutter (514-1) für das vordere Mehrradbremsseil (112) und eine zweite Kontermutter (514-2) für das unabängige vordere Bremsseil (116) umfasst, um eine freie Rotation jedes Stopfens (510-1, 510-2) bei Betrieb des Fahrzeugs zu verhindern.

7. Synchronbremssystem (100) nach Anspruch 1, ferner umfassend einen an den Mehrradbremshebel (108) angeschlossenen Verteiler (202), wobei der Verteiler (202) über das vordere Mehrradbremsseil (112) mit der Vorderradbremse (102) und über das hintere Bremsseil (114) mit der Hinterradbremse (104) gekoppelt ist, um bei Betätigung des Mehrradbremshebels (108) die Vorderrad- (102) bzw. Hinterradbremse (104) zu betätigen.

8. Synchronbremssystem (100) nach Anspruch 7, wobei der Verteiler (202) um eine Schwenkachse (207) des Verteilers geschwenkt wird, und die Schwenkachse (207) in Bezug auf eine Mittelachse (209) des Verteilers (202) entlang einer Länge des Verteilers (202) versetzt ist.

9. Synchronbremssystem (100) nach Anspruch 8, wobei der Mehrradbremshebel (108) um eine Mehrhebelschwenkachse (211) geschwenkt wird, wobei die Schwenkachse (211) der Schwenkachse (207) parallel ist.

10. Synchronbremssystem (100) nach Anspruch 8, wobei der Mehrradbremshebel (108) um eine Mehrhebelschwenkachse (211) geschwenkt wird, wobei die Schwenkachse (211) senkrecht zur Schwenkachse (207) ist.

## Revendications

1. Système de freinage synchronisé (100) pour un véhicule à deux roues, le système de freinage synchronisé (100) comprenant :
un ensemble de frein de roue avant (502) comprenant un levier à came (118), un frein de roue avant (102) et un levier de frein de roue avant (106), couplé au frein de roue avant (102) par l'intermédiaire d'un câble de frein avant indépendant (116), pour actionner le frein de roue avant (102) pendant le fonctionnement ;
un frein de roue arrière (104) ;
un levier de frein de roue combiné (108), couplé au frein de roue avant (102) par l'intermédiaire d'un câble de frein avant combiné (112) et couplé au frein de roue arrière (104) par l'intermédiaire d'un câble de frein arrière (114), pour actionner le frein de roue avant (102) et le frein de roue arrière (104), respectivement, pendant le fonctionnement ; et
**caractérisé en ce que**, le système de freinage synchronisé (100) comprend en outre :
un appareil de réduction de frottement (508) pour réduire au minimum le frottement dans le frein de roue avant (102) lors de l'actionnement d'au moins l'un parmi le levier de frein de roue avant (106) et le levier de frein de roue combiné (108), l'appareil de réduction de frottement (508) comprenant :
un insert (512-1, 512-2) monté sur chacun parmi le câble de frein avant indépendant (116) et le câble de frein avant combiné (112) pour empêcher le contact direct du levier à came (118) avec chacun parmi le câble de frein avant combiné (112) et le câble de frein avant indépendant (116), dans lequel le levier à came (118) coulisse sur l'insert (512-1, 512-2) lorsqu'il est actionné par au moins l'un parmi le levier de frein de roue avant (106) et le levier de frein de roue combiné (108).

2. Système de freinage synchronisé (100) selon la revendication 1, dans lequel l'appareil de réduction de frottement (508) comprend en outre une butée (510-1, 510-2) pour entourer et soutenir chacun parmi le câble de frein avant indépendant (116) et le câble de frein avant combiné (112).

3. Système de freinage synchronisé (100) selon la revendication 2, dans lequel chaque butée (510-1, 510-2) est filetée pour serrer contre chacun parmi le câble de frein avant combiné (112) et le câble de frein avant indépendant (116).

4. Système de freinage synchronisé (100) selon la revendication 1, dans lequel le levier à came (118) comprend une pluralité de broches (504, 506), et dans lequel le levier à came (118) coulisse sur l'insert (512-1, 512-2) au niveau de la pluralité de broches (504, 506).

5. Système de freinage synchronisé (100) selon la revendication 2, dans lequel la butée (510-1, 510-2) vient en butée contre une broche (504, 506) pour actionner le levier à came (118), lors de l'actionnement de l'un parmi le levier de frein de roue combiné (108) et le levier de frein de roue avant (106).

6. Système de freinage synchronisé (100) selon la revendication 2, dans lequel l'appareil de réduction de frottement (508) comprend en outre un premier contre-écrou (514-1) pour le câble de frein avant combiné (112), et un deuxième contre-écrou (514-2) pour le câble de frein avant indépendant (116), pour empêcher la rotation libre de chaque butée (510-1, 510-2) pendant le fonctionnement du véhicule.

7. Système de freinage synchronisé (100) selon la revendication 1 comprenant en outre un distributeur (202) relié au levier de frein de roue combiné (108), dans lequel le distributeur (202) est couplé au frein de roue avant (102) par le câble de frein avant combiné (112) et au frein de roue arrière (104) par le câble de frein arrière (114), pour actionner le frein de roue avant (102) et le frein de roue arrière (104), respectivement, lors de l'actionnement du levier de frein de roue combiné (108).

8. Système de freinage synchronisé (100) selon la revendication 7, dans lequel le distributeur (202) pivote autour d'un axe de pivot de distributeur (207), et l'axe de pivot de distributeur (207) est décalé le long d'une longueur du distributeur (202) par rapport à un axe central (209) du distributeur (202).

9. Système de freinage synchronisé (100) selon la revendication 8, dans lequel le levier de frein de roue combiné (108) pivote autour d'un axe de pivot de levier combiné (211), l'axe de pivot de levier combiné (211) étant parallèle à l'axe de pivot de distributeur (207).

10. Système de freinage synchronisé (100) selon la revendication 8, dans lequel le levier de frein de roue combiné (108) pivote autour d'un axe de pivot de levier combiné (211), l'axe de pivot de levier combiné (211) étant perpendiculaire à l'axe de pivot de distributeur (207).
